Europäisches Patentamt

European Patent Office

Office européen des brevets

(19)

(11) Veröffentlichungsnummer: **0 013 358**
**B1**

(12) **EUROPÄISCHE PATENTSCHRIFT**

(45) Veröffentlichungstag der Patentschrift: **28.09.83**

(21) Anmeldenummer: **79105022.2**

(22) Anmeldetag: **10.12.79**

(51) Int. Cl.³: **H 01 H 31/00,**
**H 01 H 33/42, H 02 B 13/02**

(54) Last- oder Leistungsschalter, insbesondere für Mittelspannungsnetze.

(30) Priorität: **16.12.78 DE 2854376**

(43) Veröffentlichungstag der Anmeldung:
**23.07.80 Patentblatt 80/15**

(45) Bekanntmachung des Hinweises auf die Patenterteilung:
**28.09.83 Patentblatt 83/39**

(84) Benannte Vertragsstaaten:
**AT BE CH FR GB IT NL SE**

(56) Entgegenhaltungen:
**DE - B - 1 953 293**
**DE - B - 2 758 455**
**DE - U - 1 938 160**

(73) Patentinhaber: **Karl Pfisterer Elektrotechnische**
**Spezialartikel GmbH & Co. KG**
**Augsburger Strasse 375**
**D-7000 Stuttgart 60 (DE)**

(72) Erfinder: **Bäuerle, Gottfried, Ing.-grad.**
**Postweg 3**
**D-7012 Fellbach-Schmiden (DE)**

(74) Vertreter: **Patentanwälte Phys. Bartels, Dipl.-Ing.**
**Fink Dipl.-Ing. Held**
**Lange Strasse 51**
**D-7000 Stuttgart 1 (DE)**

Last- oder Leistungsschalter, insbesondere für Mittelspannungsnetze

Die Erfindung betrifft einen Last- oder Leistungsschalter, insbesondere für Mittelspannungsnetze, mit einer zum Zwecke der wahlweisen Kupplung mit wenigstens einer Schalteinheit oder einer Erdungs- und/oder Kurzschließvorrichtung in unterschiedliche Positionen relativ zum Schalter bringbaren und in diesen Positionen von einem Träger gehaltenen Antriebsvorrichtung.

Bei einer bekannten Schaltanlage mit Lasttrenn- und Erdungsschaltern dieser Art (DE—B—1 953 293), die sich in einer blechgekapselten Mittelspannungsschaltanlage befinden, ist eine transportable Antriebsvorrichtung vorgesehen, welche von einer Bedienungsperson zu demjenigen Schalter, der betätigt werden soll, getragen und auf dessen Grundrahmen aufgesteckt werden muß. Nachteilig ist hierbei nicht nur, daß die Bedienungsperson die relativ schwere Antriebsvorrichtung für einen Positionswechsel vom einen zum anderen Grundrahmen tragen und auf die Steckvorrichtung des letzteren ausrichten muß, was auch genügend Platz in der Schaltanlage erfordert. Nachteilig ist vor allem auch, daß Fehlschaltungen nicht ausgeschlossen sind, als beispielsweise versehentlich ein Erdungsschalter geschlossen wird, ohne daß zuvor der zugehörige Lasttrennschalter geöffnet worden ist, zumal die Bedienungsperson die Schaltstellung der einzelnen Schalter nicht erkennen kann.

Der Erfindung liegt die Aufgabe zu Grunde, einen Schalter zu schaffen, bei dem nicht nur Aufwand und Platzbedarf auch dann gering sind, wenn er mit einer Erdungs- und/oder Kurzschließvorrichtung ausgerüstet sein muß, sondern auch die Positionierung der Antriebsvorrichtung der Bedienungsperson keine Mühe bereitet. Außerdem soll es mit einfachen Mitteln möglich sein, Fehlschaltungen zu vermeiden.

Diese Aufgabe ist mit einem Schalter der eingangs genannten Art erfindungsgemäß dadurch gelöst, daß die Antriebsvorrichtung mittels einer am Träger vorgesehenen Führung zwischen den verschiedenen Positionen hin- und herbewegbar geführt ist.

Durch eine derartige Führung für die Antriebsvorrichtung am Träger bracht die Bedienungsperson die Antriebsvorrichtung nur noch in der Führung zu bewegen, was ohne nennenswerte Kraftanstrengung möglich ist. Auch die Ausrichtung auf die Schalteinheit oder die Erdungs- und/oder Kurzschließvorrichtung bereitet keine Schwierigkeiten. Ferner läßt sich durch eine solche Führung mit einfachen Mitteln verhindern, daß Fehlschaltungen ausgeführt werden. Schließlich ist die erfindungsgemäße Lösung auch raumsparend, weil die Führung für die Antriebsvorrichtung so angeordnet werden kann, beispielsweise auf der Oberseite des Schalters, daß die Antriebsvorrichtung nicht störend in Erscheinung tritt.

Bei einer bevorzugten Ausführungsform ist die Antriebsvorrichtung um die Führung drehbar auf dem den Träger bildenden Schaltergehäuse angeordnet. Eine drehbare Lagerung der Antriebsvorrichtung läßt sich nämlich auch auf einem Schaltergehäuse ohne Schwierigkeiten und mit geringem Aufwand verwirklichen. Außerdem erleichtert die drehbare Lagerung der Antriebsvorrichtung deren Bewegung in die verschiedenen Positionen.

Sofern die Antriebsvorrichtung als Abtriebsglied einen Arm aufweist, wie dies bei einer vorteilhaften Ausführungsform der Fall ist, kann dieser im Abstand von der durch eine Drehachse gebildeten Führung der Antriebsvorrichtung einen ersten Teil einer durch eine Drehung der Antriebsvorrichtung lösbaren und wieder schließbaren Kupplungsvorrichtung tragen. Je ein zweites Teil der Kupplungsvorrichtung ist dann am Betätigungsglied der Schalteinheit und am Betätigungsglied der Erdungs- und/oder Kurzschließvorrichtung angeordnet. Besonders vorteilhaft ist hierbei, daß das Kuppeln und Entkuppeln der Antriebsvorrichtung nur ein Drehen derselben und keine weiteren Bewegungen erfordert, weil die Teile der Kupplungseinrichtung selbsttätig in Eingriff und außer Eingriff treten.

Vorzugsweise ist einer der beiden Teile der Kupplungsvorrichtung als eine Klaue, der andere als ein von der Klaue erfaßbarer Stab oder, wie bei einer bevorzugten Ausführungsform, als eine Rolle ausgebildet, da durch eine Rolle die Reibung der Kupplungsvorrichtung wesentlich vermindert werden kann.

Weist die Antriebsvorrichtung einen Steuerhebel auf, dessen Stellung kennzeichnend ist für den Zustand der Antriebsvorrichtung, dann wird vorteilhafterweise dieser Steuerhebel in einer die Bewegungen des Schalters steuernden Kulisse geführt. Mittels einer solchen Kulisse kann nämlich zum einen die erforderliche Bewegung des Schalters erzwungen und zum anderen eine falsche Betätigung des Steuerhebels verhindert werden, Beispielsweise stellt bei einem relativ zur Antriebsvorrichtung nur auf und ab bewegbarer Steuerhebel eine U-förmige Kulisse sicher, dass das Abkuppeln beispielsweise von der Schalteinheit und das Ankuppeln an die Erdungs- und/oder Kurzschliessvorrichtung nur möglich ist, wenn beide geöffnet sind.

Auch wenn bei Verwendung einer gemeinsamen Antriebsvorrichtung für die Schalteinheit oder Schalteinheiten sowie die Erdungs- und/oder Kurzschliessvorrichtung die Gefahr gering ist, dass letztere oder die Schalteinheit versehentlich betätigt werden, kann man, um jegliche Fehlbedienung auszuschalten, eine Verriegelungseinrichtung vorsehen, die bei einer Kupplung der Antriebsvorrichtung mit der Schalteinheit die Erdungs- und/oder Kurzschliessvorrichtung und bei einer Kupplung der Antriebsvorrichtung mit letzterer die Schalteinheit gegen eine Betätigung sichert. Bei einer bevorzugten Ausführungsform weist diese Verriegelungseinrichtung einen ander Antriebsvorrichtung vorgesehenen Verriegelungskörper auf, der in der ersten Position der Antriebsvorrichtung in die Bahn eines Anschlags am Betätigungsglied der Erdungs- und/oder Kurzschliessvorrichtung und in der zweiten Position in die Bahn eines Anschlags am Betätigungsglied der Schalteinheit ragt. Sowohl die Schalteinheit oder Schalteinheiten als auch die Erdungs- und/oder Kurzschliessvorrichtung sind hier also mechanisch in der geöffneten Stellung verriegelt, solange die Antriebsvorrichtung nicht mit ihnen gekuppelt ist.

Im folgenden ist die Erfindung anhand eines in der Zeichnung dargestellten Ausführungsbeispiels im einzelnen erläutert. Es zeigen:

Fig. 1 eine Vorderansicht des Ausführungsbeispiels,

Fig. 2 einen vergrössert dargestellten Ausschnitt der Fig. 1,

Fig. 3 einen Schnitt nach der Linie III—III der Fig. 1,

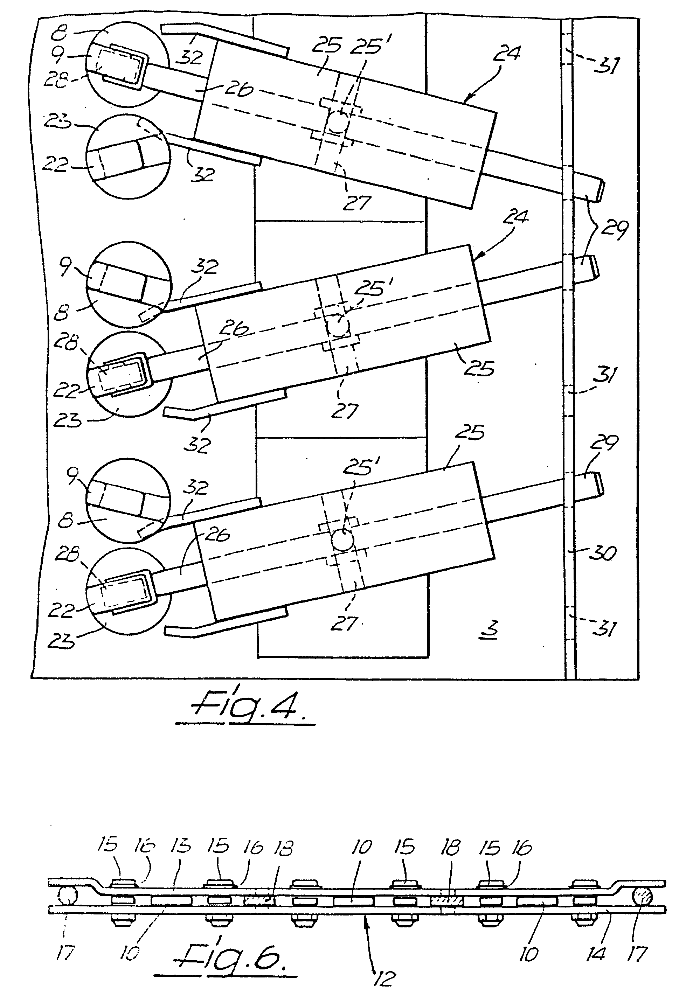

Fig. 4 eine unvollständig und vergrössert dargestellte Draufsicht auf das Ausführungsbeispiel,

Fig. 5 eine aufgebrochen dargestellte Rückansicht,

Fig. 6 eine Draufsicht auf die Kurzschliessschiene der im Schalterinneren angeordneten Erdungs- und/oder Kurzschliessvorrichtung.

Ein Last- oder Leistungsschalter für ein Mittelspannungsnetz weist ein quaderförmiges, metallisches Schaltergehäuse 1 auf, das im montierten Zustand des Schalters geerdet ist. In diesem mit $SF_6$-Gas oder einem anderen Isoliergas gefüllten Schaltergehäuse 1 sind neun einphasige, gleich ausgebildete Schalteinheiten 2 mit lotrecht zum Deckel 3 des Schaltergehäuses 1 stehender Längsachse in drei Reihen angeordnet. Das untere Ende der Schalteinheiten 2 ist fest mit dem Boden des Schaltergehäuses verbunden; durch das obere Ende ist je eine Betätigungsstange 4 herausgeführt, die relativ zur Schalteinheit in zum Deckel 3 lotrechter Richtung verschiebbar ist. Die Betätigungsstangen 4 der zu einer Reihe gehörenden und den drei unterschiedlichen Phasen zugeordneten Schalteinheiten 2 sind an ihrem oberen Ende an einer Traverse 5 befestigt, an die sich in Verlängerung der mittleren Betätigungsstange 4 eine Schaltstange 6 anschliesst, die lotrecht durch den Deckel 3 und einen auf diesen aufgesetzten Führungs- und Dichtungskörper 7 hindurchgeführt ist. In gleicher Weise sind die Betätigungsstangen 4 der übrigen zwei Reihen von Schalteinheiten 2 mit zwei anderen Schaltstangen 6 verbunden, die in einer Reihe hinter der in Figur 3 sichtbaren Schaltstange liegen.

Das obere Ende jeder der Schaltstangen 6 trägt eine radial über die Schaltstange überstehende Scheibe 8, welche die Basis einer einstückig mit ihr ausgebildeten, U-förmigen Klaue 9 bildet, die mit ihrem einen U-Schenkel an der Scheibe 8 anliegt.

Jede der Schalteinheiten 2 weist einen messerartigen Erdungskontaktkörper 10 auf, der von einem aus jeder Schalteinheit in gleicher Höhe und in radialer Richtung austretenden Bolzen 11 sich gegen den Deckel 3 hin erstreckt. Die Erdungskontaktkörper 10 der zu einer Reihe gehörenden Schalteinheiten 2 liegen in einer gemeinsamen Ebene, und diese drei Ebenen der drei Reihen liegen ihrerseits parallel zueinander.

Um die Erdungskontaktkörper 10 der Schalteinheiten 2 einer Reihe oder, anders ausgedrückt, eines dreiphasigen Schalters, kurzschliessen und erden zu können, ist eine parallel zum Deckel 3 liegende und seitlich neben den zusammengehörigen Schalteinheiten 2 in der durch deren Erdungskontaktkörper 10 definierten Ebene angeordneten Kurzschliess- und Erdungsschiene 12 vorgesehen. Wie Fig. 6 zeigt besteht die Kurzschliess- und Erdungsschiene 12 aus zwei im Abstand nebeneinander liegenden, gleich langen Flachschienen 13 und 14, welche mittels sie in Abständen durchdringender Schrauben 15 und je einer unter deren Kopf untergelegten Tellerfeder 16 gegen einander gedrückt werden. Der minimale Abstand der beiden Flachschienen zueinander, der etwas kleiner gewählt ist als die Stärke der zwischen die Flachschienen einführbaren Erdungskontaktkörper 10, wird durch von den Schrauben 15 getragenen Distanzhülsen festgelegt. Die beiden gabelförmigen Enden der Kurzschliess- und Erdungsschiene 12 nehmen je einen Stehbolzen 17 auf, der sich vom Boden des Schaltergehäuses 2 aus gegen den Deckel hin erstreckt und etwas oberhalb des oberen Endes der Erdungskontaktkörper 10 einen verminderten Aussendurchmesser hat. Dieser verminderte Aussendurchmesser hat zur Folge, dass bei einer Bewegung der Kurzschliess- und Erdungsschiene 12 in Längsrichtung der Bolzen 17 die zwischen diesen und den Flachschienen vorhandene Reibung relativ gering ist, solange die Kurzschliess- und Erdungsschiene 12 sich oberhalb der Erdungskontaktkörper 10 befindet und diese nicht kontaktiert, und dass in demjenigen Verschiebebereich, in dem die Erdungskontaktkörper 10 zwischen die beiden Flachschienen 13 und 14 eingreifen, der Kontaktdruck zwischen den Flachschienen 13 und 14 sowie den Stehbolzen 17 ausreichend gross ist, um auch hohe Ströme übertragen zu können, wie sie dann auftreten, wenn die Erdungskontaktkörper 10 unter Spannung stehen. In diesem Falle, d.h., wenn über die Kurzschliess- und Erdungsschiene 12 ein Strom fliesst wirkt der Stromfluss in den beiden Flachschienen 13 und 14 eine Kraft, welche die Schienen gegeneinanderdrückt. Hierdurch werden die Kontakte zwischen den Erdungskontaktkörpern 10 sowie den Flachschienen 13 und 14 ebenso verbessert wie zwischen diesen Schienen und den Stehbolzen 17.

Die Kurzschliess- und Erdungsschiene 12 ist zwischen den drei Kontaktbereichen für die Erdungskontaktkörper 10 an zwei Verbindungsstangen 18 angehängt, welche sich parallel zueinander und zu den Stehbolzen 17 gegen den Deckel 3 hin erstrecken und im Abstand von diesem an ihrem oberen Ende durch eine Traverse 19 miteinander verbunden sind, die mittig mit einer durch den Deckel 3 und einen auf diesen aufgesetzten Führungs- und Dichtungskörper 20 lotrecht hindurchgeführten Betätigungsstange 21 verbunden ist. Diese Betätigungsstange 21 ist, wie Fig. 5 zeigt, im Abstand neben der Schaltstange angeordnet, da die durch die Erdungskontaktkörper 10 definierte Ebene, in welcher auch die Betätigungsstange 21 liegt, gegenüber der durch die Längsmittelachse der zugehörigen Schalteinheit 2 definierten Ebene versetzt ist.

Der Verschiebeweg der Betätigungsstange 21 für das Schliessen und Oeffnen der Erdungs- und Kurzschliessvorrichtung ist gleich gross gewählt wie der Verschiebeweg der Schaltstange 6, mittels deren gleichzeitig die zum selben Schalter gehörenden Schalteinheiten 3 geschaltet werden. Ausserdem trägt die Betätigungsstange 21 eine wie die Klaue 9 ausgebildete U-förmige Klaue 22, deren einer U-Schenkel auf einer über die Stange radial überstehenden Scheibe 23 aufliegt, deren Grösse der Scheibe 8 entspricht.

Wie Figur 3 zeigt, sind die Klauen 9 und 22 so ausgerichtet, dass sie sich in der gleichen Richtung öffnen, nämlich zu einer Schalterantriebsvorrichtung 24 hin, welche auf dem Deckel 3 des Schaltergehäuses 1 angeordnet ist, wie dies insbesondere Figur 3 zeigt.

Da im Ausführungsbeispiel das Schaltergehäuse 1 drei dreiphasige Schalter enthält, sind drei gleich ausgebildete Schalterantriebsvorrichtung 24 in einer zu den Schaltstangen 6 und Betätigungsstangen 21 parallelen Reihe angeordnet. Alle Schalterantriebsvorrichtungen 24 sind ebenso wie die zugeordneten Schalteinheiten und die Erdungs- und Kurzschliessvorrichtungen gleich ausgebildet.

Jede der Schalterantriebsvorrichtungen 24 hat ein quaderförmiges Gehäuse 25, das um eine lotrecht auf dem Deckel 3 stehende Drehachse 25' drehbar, aber in Längsrichtung dieser Drehachse unverschiebbar, mit dem Deckel 3 verbunden ist. Aus der der zugeordneten Schaltstange 6 und der zugeordneten Betätigungsstange 21 zugekehrten Rückwand des Gehäuses 24 ist ein Abtriebshebel 26 herausführt, der um eine bei horizontaler Lage des Deckels 3 horizontale Schwenkachse 27 verschwenkbar ist und an seinem freien Ende eine Rolle 28 trägt, die um eine zur Schwenkachse 27 parallele Achse drehbar ist und deren Aussendurchmesser so gewählt ist, dass die mit geringem Spiel in die Klaue 9 oder die Klaue 22 eingreifen kann. Durch die den Klauen abgekehrte Vorderwand des Gehäuses 24 ist ein Antriebshebel 29 herausgeführt, welcher im Ausführungsbeispiel ebenfalls auf der Schwenkachse 27 gelagert ist. Im Gehäuse 24 befinden sich zwei Federn, die durch eine Bewegung des Antriebshebels 29 nach oben bzw. nach unten gespannt werden können und die in ihnen gespeicherte Energie auf den Abtriebshebel 26 übertragen, wenn der Antriebshebel 29 seine Endstellung erreicht.

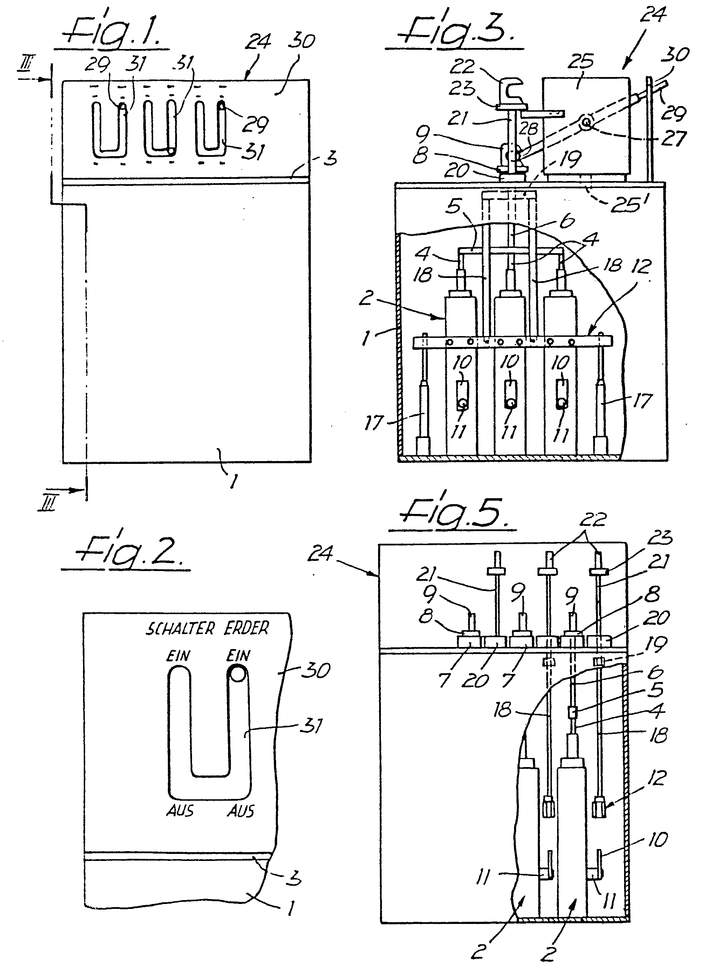

Im Abstand vor den Schalterantriebsvorrichtungen 24 steht auf dem Deckel 3 eine Kulissenplatte 30, die fest mit dem Deckel 3 verbunden ist und je eine U-förmige Kulisse 31 für jeden Antriebshebel 29 hat, der durch diese Kulisse hindurchgeführt ist. Befindet sich der Antriebshebel 29 in dem in Figur 1 links dargestellten Schenkel der Kulisse 31, dann steht die Schalterantriebsvorrichtung 24 in einer ersten Position, in welcher sich die Rolle 29 im Eingriff mit der Klaue 9 befindet. Eine Bewegung des Antriebshebels 29 in die obere Endstellung hat deshalb das Schliessen der zugeordneten Schalteinheiten 2 zur Folge, wobei der in dem Gehäuse 24 enthaltene Federspeicher für eine ausreichend schnelle Schwenkbewegung des Abtriebshebels 26 sorgt. Wird anschliessend der Antriebshebel 29 wieder in seine tiefste Stellung bewegt, dann wird der durch die zugeordneten Schalteinheiten 2 gebildete Schalter mit der durch den im Gehäuse 24 befindlichen Federspeicher bestimmten Schaltgeschwindigkeit geöffnet. Der Antriebshebel 29 kann nun im Jochabschnitt der Kulisse 31 zum anderen U-Schenkel geführt werden. Dabei tritt die Rolle 28 seitlich aus der Klaue aus und gegen Ende der Schwenkbewegung der Schalterabtriebsvorrichtung 24 seitlich in die Klaue 22 der Erdungs- und Kurzschliessvorrichtung ein. Wird nun der Antriebshebel 29 in seine obere Endstellung bewegt, dann wird erneut der Federspeicher gespannt, bis er nach der Freigabe mit grosser Schaltgeschwindigkeit die Betätigungsstange 21 nach unten bewegt und dabei die Kurzschliess- und Erdungsschiene 12 auf die Erdungskontaktkörper 10 aufsteckt, wodurch die zugehörigen drei Schalteinheiten 2 geerdet und kurzgeschlossen werden. Eine Bewegung des Antriebshebels 29 nach unten führt zur Beendigung des Kurzschlusses und der Erdung mit der hohen, durch den Federspeicher bedingten Schaltergeschwindigkeit.

In gleicher Weise lassen sich mit Hilfe der beiden anderen, schwenkbaren Schalterantriebsvorrichtungen die diesen zugeordneten Schalter sowie Erdungs- und Kurzschliessvorrichtungen betätigen.

Damit die Schaltstange 6 oder die Betätigungsstange 21 sich nicht aus der Position, in welcher der Schalter bzw. die Erdungs- und Kurzschliessvorrichtung geöffnet ist, nach unten in die Schliessstellung bewegen kann, während sie nicht mit dem Abtriebshebel 26 der zugeordneten Schalterantriebsvorrichtung 24 gekuppelt ist, sind am Gehäuse 24 der Schalterantriebsvorrichtung zwei Verriegelungsfinger 32 befestigt, welche sich gegen die beiden Stangen 6 und 21 erstrecken. In derjenigen Position, in welcher die Schalterantriebsvorrichtung 24 mit der Schaltstange 6 gekuppelt ist, untergreift einer der beiden Verriegelungsfinger 32 die auf der Betätigungsstange 21 angeordnete Scheibe 23, wodurch die Scheibe 23 und mit ihr die Betätigungsstange 21 in dieser Stellung verriegelt ist. Der andere Verriegelungsfinger 32 ist dabei aus dem Bewegungsbereich der Scheibe 8 herausgeschwenkt. Wird die Schalterantriebsvorrichtung 24 in eine Mittelstellung geschwenkt, in welcher die Rolle 28 mit keiner der beiden Klauen 9 und 22 gekuppelt ist, sondern sich zwischen diesen befindet, dann blockiert der eine Verriegelungsfinger 32 die Scheibe 8, der andere die Scheibe 23. In derjenigen Position, in welcher die Schalterantriebsvorrichtung 24 mit der Betätigungsstange 21 gekuppelt ist, wird die Schaltstange 6 durch den einen der beiden, die Scheibe 8 untergreifenden Verriegelungsfinger 32 in der Ausschaltstellung verriegelt.

## Patentansprüche

1. Last- oder Leistungsschalter, insbesondere für Mittelspannungsnetze, mit einer zum Zwecke der wahlweisen Kupplung mit wenigstens einer Schalteinheit (2) oder einer Erdungs- und/oder Kurschließvorrichtung (10, 12) in unterschiedliche Positionen relativ zum Schalter bringbaren und in diesen Positionen von einem Träger (1, 3) gehaltenen Antriebsvorrichtung (24), dadurch gekennzeichnet, daß die Antriebsvorrichtung (24) mittels einer am Träger (1, 3) vorgesehenen Führung (Drehachse 25') zwischen den verschiedenen Positionen hin- und herbewegbar geführt ist.

2. Schalter nach Anspruch 1, dadurch gekennzeichnet, daß die Antriebsvorrichtung (24) um die Führung (Drehachse 25') drehbar auf dem den Träger bildenden Schaltergehäuse (1, 3) angeordnet ist, wobei in den verschiedenen Positionen, denen unterschiedlichen Winkelstellungen der Antriebsvorrichtung (24) zugeordnet sind, ein Abtriebsglied (26, 28) der Antriebsvorrichtung (24) in Eingriff mit einem Antriebsglied (9, 22) der Schalteinheit (2) bzw. der Erdungs- und/oder Kurzschließvorrichtung (10, 12) gebracht ist.

3. Schalter nach Anspruch 2, dadurch gekennzeichnet, daß das Abtriebsglied (26, 28) einen Arm (26) aufweist, der im Abstand von der durch eine Drehachse (25') gebildeten Führung der Antriebsvorrichtung (24) einen ersten Teil (28) einer durch eine Drehung der Antriebsvorrichtung (24) lösbaren und wieder schließbaren Kupplungsvorrichtung (9, 22, 28) trägt, und daß je ein zweites Teil (9, 22) der Kupplungsvorrichtung (9, 22, 28) am Betätigungsglied (6) der Schalteinheit (2) und am Betätigungsglied (21) der Erdungs- und/oder Kurzschließvorrichtung (10, 12) angeordnet ist.

4. Schalter nach Anspruch 3, dadurch gekennzeichnet, daß die beiden der Schalteinheit (2) bzw. der Erdungs- und/oder Kurzschließvorrichtung (10, 12) zugeordneten zweiten Teile (9, 22) der Kupplungsvorrichtung (9, 22, 28) als Klaue (9, 22) ausgebildet sind.

5. Schalter nach Anspruch 3 oder 4, dadurch gekennzeichnet, daß die Betätigungsglieder der Schalteinheit (2) und der Erdungs- und/oder Kurzschließvorrichtung (10, 12) längsverschiebbare Stange (6, 21) sind, die parallel zueinander und im Abstand nebeneinander angeordnet sind, und daß Durchführungen (7, 20) für beide Stangen (6, 21) in derselben Wand (3) des Schaltergehäuses vorgesehen sind.

6. Schalter nach Anspruch 5, dadurch gekennzeichnet, daß bei einer mehrphasigen Ausbildung jede Betätigungsstange (21) der Erdungs- und/oder Kurzschließvorrichtung (10, 12) mit wenigstens einer quer zur Stangenlängsrichtung verlaufenden Brücke (19) verbunden ist, welche eine den Schalteinheiten (2) desselben mehrphasigen Systems zugeordnete Kontaktvorrichtung (12) trägt.

7. Schalter nach Anspruch 5 oder 6, dadurch gekennzeichnet, daß bei einer Ausbildung führ mehrere mehrphasige Systeme die den verschiedenen Systemen zugehörigen Schalteinheiten (2) in zueinander parallelen Reihen angeordnet sind und daß je eine der jedem System zugeordnete Erdungs- und/oder Kurzschließvorrichtung (10, 12) auf die Zwischenräume zwischen den benachbarten Reihen von Schalteinheiten (2) ausgerichtet ist.

8. Schalter nach einem der Ansprüche 1 bis 7, dadurch gekennzeichnet, daß die Antriebsvorrichtung (24) einen Steuerhebel (29) aufweist, der in einer die Bewegung der Antriebsvorrichtung (24) steuernden Kulisse (31) geführt ist.

9. Schalter nach einem der Ansprüche 1 bis 8, gekennzeichnet durch eine bei einer Kupplung der Antriebsvorrichtung (24) mit der Schalteinheit (2) die Kurzschließ- und/oder Erdungsvorrichtung (10, 12) und bei einer Kupplung der Antriebsvorrichtung (24) mit letzterer die Schalteinheit (2) gegen eine Betätigung sichernde Verriegelungseinrichtung (8, 23, 32).

10. Schalter nach Anspruch 9, dadurch gekennzeichnet, daß die Verriegelungseinrichtung wenigstens einen an der Antriebsvorrichtung (24) vorgesehenen Verriegelungskörper (32) aufweist, der in der ersten Position der Antriebsvorrichtung in die Bahn eines Anschlags (23) am Betätigungsglied (21) der Erdungs- und/oder Kurzschließvorrichtung und in der zweiten Position in die Bahn eines Anschlags (8) am Betätigungsglied (6) der Schalteinheit (2) ragt.

## Revendications

1. Disjoncteur de charge ou de puissance, notamment pour des réseaux de tension moyenne, comportant un dispositif d'entraînement (24) pouvant être amené, en vue d'un accouplement sélectif avec au moins une unité de commutation (2) ou bien un dispositif de mise à la terre et/ou court-circuitage (10, 12) dans des positions différentes, par rapport au disjoncteur et maintenu dans ces positions par un support (1, 3), caractérisé en ce que le dispositif d'entraînement (24) est guidé dans un mouvement alternatif entre les différentes positions à l'aide d'un guide (axe de rotation 25') prévu sur le support (1, 3).

2. Disjoncteur selon la revendication 1, caractérisé en ce que le dispositif d'entraînement (24) est disposé sur le carter de disjoncteur (1, 3) formant le support de manière à pouvoir tourner autour du guide (axe de rotation 25'), auquel cas dans les différentes positions auxquelles sont associées différentes positions angulaires du dispositif d'entraînement (24), un organe de sortie de mouvement (26, 28) du dispositif d'entraînement (24) est amené en prise avec un organe d'entraînement (9, 22) de l'unité de commutation (2) ou bien du dispositif de mise à la terre et/ou court-circuitage (10, 12).

3. Disjoncteur selon la revendication 2, caractérisé en ce que l'organe de sortie de mouvement (26, 28) comporte in bras (26) qui, à une certaine distance du guide du dispositif d'entraînement constitué par un axe de rotation (25'), porte une premier partie (28) du dispositif d'accouplement (9, 22, 28) pouvant être ouvert et à nouveau fermé par une rotation du dispositif d'entraînement (24), et en ce qu'une seconde partie (9, 22) du dispositif d'accouplement (9, 22, 28) est disposée sur l'organe d'actionnement (6) de l'unité de commutation (2) et sur l'organe d'actionnement (21) du dispositif de mise à la terre et/ou court-circuitage (10, 12).

4. Disjoncteur selon la revendication 3, caractérisé en ce que les deux secondes parties (9, 22) associées à l'unité de commutation (2) ou au dispositif de mise à la terre et/ou court-circuitage (10, 12), du dispositif d'accouplement (9, 22, 28) sont agencées sous forme de griffes (9, 22).

5. Disjoncteur selon l'une des revendications 3 et 4, caractérisé en ce que les organes d'actionnement de l'unité de commutation (2) et du dispositif de mise à la terre et/ou court-circuit (10, 12) sont des barres (6, 21) déplaçables longitudinalement, disposées parallèlement entre elles et placées à une certaine distance l'une à côté de l'autre, et en ce qu'il est prévu des guides traversant (7, 20) pour les deux barres (6, 21) dans la même paroi (3) du carter de disjoncteur.

6. Disjoncteur selon la revendication 5, caractérisé en ce que, dans le cas d'un agencement polyphasé de chaque tige d'actionnement (21), le dispositif de mise à la terre et/ou court-circuitage (10, 12) est relié avec au moins un pontet (19) orienté perpendiculairement à la direction longitudinale des barres et qui porte un dispositif de contact (12) associé aux unités de commutation (2) du même système polyphasé.

7. Disjoncteur selon l'une des revendications 5 et 6, caractérisé en ce que, dans le cas d'un agencement pour plusieurs systèmes polyphasés, les unités de commutation (2) associées aux différents systèmes sont placées en des rangées parallèles entre elles et en ce que chacun des dispositifs de mise à la terre et/ou court-circuitage (10, 12) associées à chaque système est aligné sur les volumes intermédiaires existant entre les rangées adjacentes d'unités de commutation.

8. Disjoncteur selon l'une des revendications 1 à 7, caractérisé en ce que le dispositif d'entraînement (24) comporte un levier de commande (29) qui est guidé dans une coulisse (31) assurant la commande du mouvement du dispositif d'entraînement (24).

9. Disjoncteur selon l'une des revendications 1 à 8, caractérisé en ce qu'il est prévu un dispositif de verrouillage (8, 23, 32) empêchant un actionnement du dispositif de court-circuitage et/ou de mise à la terre (10, 12) lors d'un accouplement du dispositif d'entraînement (24) avec l'unité de commutation (2) et un actionnement de l'unité de commutation (2) lors d'un accouplement du dispositif d'entraînement (24) avec le dispositif de court-circuitage et/ou mise à la terre (10, 12).

10. Disjoncteur selon la revendication 9, caractérisé en ce que le dispositif de verrouillage comporte au moins un corps de verrouillage (32) prévu sur le dispositif d'entraînement (24) et qui, dans la première position du dispositif d'entraînement, pénètre dans le trajet d'une butée (23) placée sur l'organe d'actionnement (21) du dispositif de mise à la terre et/ou court-circuitage et, dans la seconde position, dans le trajet d'une butée (8) placée sur l'organe d'actionnement (6) de l'unité de commutation (2).

## Claims

1. Power or load circuit-switch, in particular for medium voltage networks, comprising a driving device (24) which can be brought into differing positions relative to the switch for the purpose of selective coupling to at least one switching unit (2) or one earthing and/or short-circuiting device (10, 12) and which is held in these positions by a support (1, 3), characterised in that the driving device (24) is guided to be movable between the various positions by means of a guide (swivel pin 25') provided on the support (1, 3).

2. Switch according to claim 1, characterised in that the driving device (24) is arranged on the switch housing (1, 3) forming the support so as to be rotatable about the guide (swivel pin 25'), and, in the various positions corresponding to different angular settings of the driving device (24), a driven member (26, 28) of the driving device (24) is brought into engagement with a driving member (9, 22) of the switching unit (2) or of the earthing and/or short-circuiting device (10, 12).

3. Switch according to claim 2, characterised in that the driven member (26, 28) has an arm (26) comprising, at some distance from a swivel pin (25') forming the guide of the driving device (24), a first part (28) of a coupling device (9, 22, 28) which can be disconnected and reconnected by rotation of the driving device (24), and that a second part (9, 22) of the coupling device (9, 22, 28) is arranged on the actuating member (6) of the switching unit (2) and, respectively, on the actuating member (21) of the earthing and/or short-circuiting device (10, 12).

4. Switch according to claim 3, characterised in that the two second parts (9, 22) of the coupling device (9, 22, 28) which are associated with the switching unit (2) and, respectively, the earthing and/or short-circuiting device (10, 12) are each in the form of a claw (9, 22).

5. Switch according to claim 3 or claim 4, characterised in that the actuating members of the switching unit (2) and of the earthing and/or short-circuiting device (10, 12) are in the form of longitudinally displaceable rods (6, 21) arranged parallel to each other and spaced apart side by side, and in that openings forming passages (7, 20) for the two rods (6, 21) are provided in the same wall (3) of the switch housing.

6. Switch according to claim 5, characterised in that in a multiphase embodiment, each actuating rod (21) of the earthing and/or short-circuiting device (10, 12) is connected to at least one bridge (19) which extends transversely to the longitudinal direction of the rods and which carries a contact device (12) associated with the switching units (2) of the same multiphase system.

7. Switch according to claim 5 or claim 6, characterised in that in an embodiment for a plurality of multiphase systems, the switching units (2) associated with the various systems are arranged in parallel rows and in that in each case an earthing and/or short-circuiting device (10, 12) associated with each system is aligned with the gaps between adjacent rows of switching units (2).

8. Switch according to one of the claims 1 to 7, characterised in that the driving device (24) comprises a control lever (29) guided in a slot (31) which controls the movement of the driving device (24).

9. Switch according to one of the claims 1 to 8, characterised by a locking device (8, 23, 32) which secures the short-circuiting and/or earthing device (10, 12) against being actuated when the driving device (24) is coupled to the switching unit (2) and secures the switching unit (2) against being actuated when the driving device (24) is coupled to the short-circuiting and/or earthing device (10, 12).

10. Switch according to claim 9, characterised in that the locking device comprises at least one locking member (32) provided on the driving device (24), which locking member extends into the path of a stop (23) on the actuating member (21) of the earthing and/or short-circuiting device when the driving device is in a first position and extends into the path of a stop (8) on the actuating member (6) of the switching unit (2) when the driving device is in the second position.

**Fig.1.**

**Fig.3.**

**Fig.2.**

SCHALTER    ERDER

EIN    EIN

AUS    AUS

**Fig.5.**

Fig.4.

Fig.6.

2